**Europäisches Patentamt**

**European Patent Office**

**Office européen des brevets**

(11) Veröffentlichungsnummer: **0 287 849**
**B1**

(12) **EUROPÄISCHE PATENTSCHRIFT**

(45) Veröffentlichungstag der Patentschrift:
**16.08.90**

(21) Anmeldenummer: **88104928.2**

(22) Anmeldetag: **26.03.88**

(51) Int. Cl.⁵: **B60H 1/00**

(54) **Luftausströmvorrichtung.**

(30) Priorität: **23.04.87 DE 3713591**

(43) Veröffentlichungstag der Anmeldung:
**26.10.88 Patentblatt 88/43**

(45) Bekanntmachung des Hinweises auf die Patenterteilung:
**16.08.90 Patentblatt 90/33**

(84) Benannte Vertragsstaaten:
**ES FR GB IT**

(56) Entgegenhaltungen:
**AU-B- 462 287**
**DE-U- 1 991 878**
**DE-U- 8 535 924**
**FR-A- 2 562 846**
**GB-A- 2 072 327**

(73) Patentinhaber: **Preh-Werke GmbH & Co. KG,
Postfach 1740 An der Stadthalle, D-8740 Bad
Neustadt/Saale(DE)**

(72) Erfinder: **Bauer, Karl-Heinz, Lerchenstrasse 9,
D-8740 Bad Neustadt/Saale(DE)**
Erfinder: **Eckert, Gerold, Am Bersbach 16, D-8740 Bad
Neustadt/Saale(DE)**

Anmerkung: Innerhalb von neun Monaten nach der Bekanntmachung des Hinweises auf die Erteilung des europäischen Patents im Europäischen Patentblatt kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

## Beschreibung

Die Erfindung betrifft eine Luftausströmvorrichtung mit einem Gehäusekörper und einer bei einer Luftdurchtrittsöffnung um eine Schwenkachse schwenkbar gelagerten, elastisch verwindbaren Verschlußklappe, an deren einem Endbereich ein Bedienteil angreift, wobei die Schwenkachse parallel zu und zwischen an der Verschlußklappe ausgebildeten Dichträndern verläuft, deren jedem ein Anschlagrand der Luftdurchtrittsöffnung zugeordnet ist, welcher in einer Klappenstellung nahe der Schließstellung mit dem ihm zugeordneten Dichtrand einen Längsspalt bildet.

Derartige Luftausströmvorrichtungen werden beispielsweise in Kraftfahrzeugen verwendet. Sie dienen dem Einstellen der Luftzufuhr zum Fahrzeuginnenraum.

In dem DE-U1 85 35 924 ist eine Verschlußklappe für eine solche Luftausströmvorrichtung beschrieben.

Bei derartigen Luftausströmvorrichtungen soll die Verschlußklappe in der Schließstellung möglichst luftströmungsdicht sein. Unvermeidliche Toleranzen der die Luftausströmvorrichtung bildenden Kunststoff-Formteile stehen einer sicheren Abdichtung entgegen. Darüber hinaus kann ein Verwinden der flächigen Verschlußklappe zu Undichtigkeiten führen. Dies insbesondere deswegen, weil die Verschlußklappe meist nur an einem Ende ihrer Schwenkachse angetrieben wird.

Undichtigkeiten sind nicht nur deswegen unangenehm, weil dann die Luftzufuhr nicht vollständig abstellbar ist, sondern auch weil Restluftströme zu Pfeifgeräuschen führen können.

Aufgabe der Erfindung ist es, eine Luftausströmvorrichtung der eingangs genannten Art vorzuschlagen, bei der mit einfachen Mitteln trotz Bauteiltoleranzen in Schließstellung ein dichter Abschluß des Längsspaltes erreicht ist.

Erfindungsgemäß ist obige Aufgabe bei einer Luftausströmvorrichtung der eingangs genannten Art dadurch gelöst, daß der Längsspalt sich vor der Schließstellung von dem bedienteilnahen Ende des Anschlagrandes zum bedienteilfernen Ende verengt, so daß bei der Schließbewegung der Dichtrand zunächst im bedienteilferneren Bereich und dann im bedienteilnäheren Bereich an dem Anschlagrand zur Anlage kommt.

Dabei wird die Verwindbarkeit der Verschlußklappe bewußt zur Verbesserung des Dichtsitzes in Schließstellung ausgenutzt. Bei der Schließbewegung legt sich der Dichtrand zunächst im bedienteilfernen Bereich an dem Anschlagrand an. Die Anlage schreitet von dort aus auf den bedienteilnahen Bereich zunehmend fort.

Ein weiterer Vorteil besteht darin, daß der Längsspalt bei Beginn der Schließbewegung noch hinreichend groß ist, um ein Pfeifen der durchtretenden Luftströmung auszuschließen.

Günstig ist auch, daß die Kraft, mit der der Dichtrand der Verschlußklappe an dem Anschlagrand anliegt, über die gesamte Länge des Dichtrandes im wesentlichen gleich ist.

Vorzugsweise ist die Verschlußklappe in der Schließstellung verrastet. Durch das beim Schließen erfolgende Verwinden der Verschlußklappe ist der Dichtrand auch in der Raststellung unter Druck an dem Anschlagrand gehalten.

Wird die Raststellung gelöst, dann stellt sich die Verschlußklappe ohne weiteres so auf, daß der Längsspalt einen Mindestöffnungsquerschnitt bildet, der ein Pfeifen durchtretender Luft unterbindet.

Nimmt durch Alterungsprozesse die elastische Verwindbarkeit der Verschlußklappe ab, dann ist der Anlagedruck zwar verringert; jedoch ist die Dichtwirkung immer noch besser als bei einer Luftausströmvorrichtung nach dem Stand der Technik bei gleicher Alterung.

In bevorzugter Ausgestaltung der Erfindung ist der sich verengende Längsspalt dadurch gebildet, daß der Anschlagrand geneigt zur Schließebene verläuft. In der Fertigung erscheint dies einfacher als den sich verengenden Längsspalt dadurch zu bilden, daß die Verschlußklappe so vorgeformt ist, daß ihr Dichtrand geneigt zur Schließebene verläuft.

In einer anderen vorteilhaften Ausgestaltung der Erfindung wird der sich verengende Längsspalt durch eine elastische Dichtlippe der Verstellklappe gebildet, die den geneigt zur Schließebene verlaufenden Dichtrand der Verstellklappe darstellt. Hierbei unterstützt die Elastizität der Dichtlippe die bewußt genutzte Verwindbarkeit der Verschlußklappe.

Weitere vorteilhafte Ausgestaltungen der Erfindung ergeben sich aus den Unteransprüchen. Im folgenden wird die Erfindung anhand eines Ausführungsbeispiels näher beschrieben.

In der Zeichnung zeigen:

Figur 1 eine Luftausströmvorrichtung in Aufsicht mit offenstehender Verschlußklappe,

Figur 2 einen Schnitt längs der Linie II-II nach Figur 1, wobei die Verschlußklappe am Beginn ihrer Schließstellung steht
und

Figur 3 schematisch einen Schnitt längs der Linie III-III nach Figur 2, wobei die Verschlußklappe in der in Figur 2 dargestellten Stellung steht.

Ein Gehäusekörper (1) bildet einen Lufteinströmschacht (2) mit einer Luftdurchtrittsöffnung (3) und einen Luftaustrittsschacht (4). In der Luftdurchtrittsöffnung (3) ist eine Verschlußklappe (5) an Lagerstellen (6, 7) um eine Schwenkachse (8) schwenkbar gelagert.

Die Luftdurchtrittsöffnung (3) ist einerseits durch einen oberen Anschlagrand (9) und andererseits durch einen unteren Anschlagrand (10) begrenzt. Die beiden Anschlagränder (9, 10) verlaufen etwa parallel zur Schwenkachse, die sich mittig zwischen den beiden Anschlagrändern (9, 10) erstreckt.

Die Verschlußklappe (5) ist ein elastisch verwindbares Kunststoff-Formteil. Sie weist einen dem oberen Anschlagrand (9) zugeordneten ersten Dichtrand (11) einerseits und andererseits einen dem unteren Anschlagrand (10) zugeordneten zweiten Dichtrand (12) auf.

An der Verschlußklappe (5) ist ein exzentrischer Betätigungszapfen (13) ausgebildet. Dieser ist über einen Kniehebel (14) mit einem Zapfen (15) eines radförmigen Bedienteils (16) gekuppelt. Die Anordnung ist dabei so getroffen, daß in der Schließstellung der Verschlußklappe (5) der Kniehebelantrieb (13, 14, 15) über seinen einen Totpunkt gerastet ist.

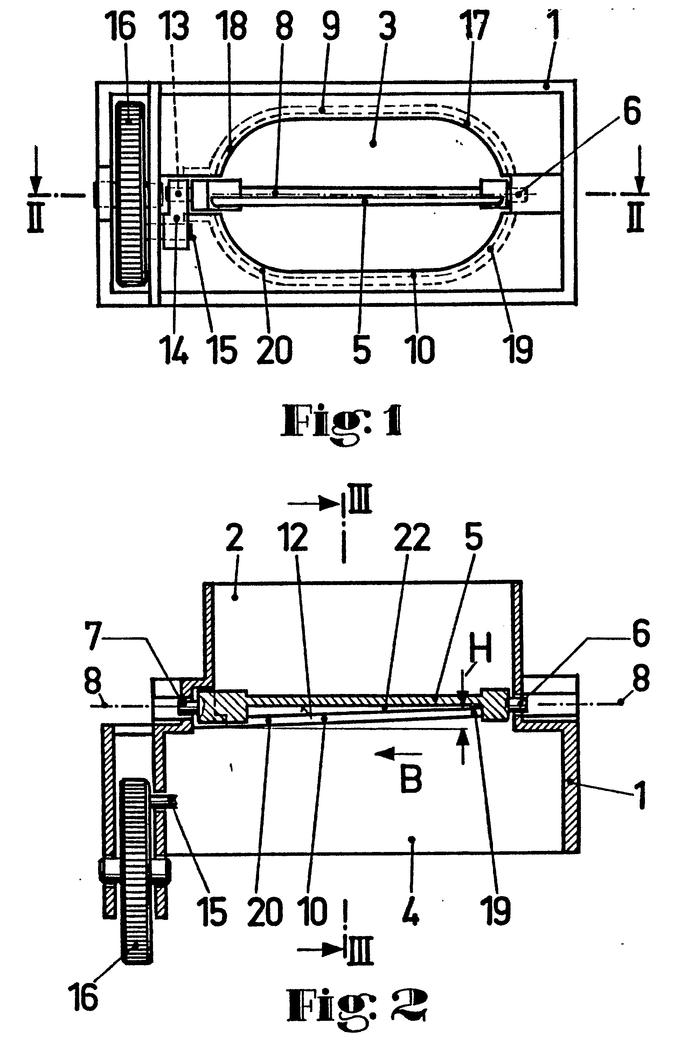

Der obere Anschlagrand (9) und der untere Anschlagrand (10) verlaufen jeweils geneigt zur Schließebene. Für den unteren Anschlagrand (10) ist dies aus Figur 2 ersichtlich. Der obere Anschlagrand (9) hat in seinem bedienteilfernen Endbereich (17) die größte Höhe (H) und fällt zu seinem Endbereich (18) hin ab -senkrecht zur Zeichenebene der Figur 1 gesehen-. Entsprechend ist der untere Anschlagrand (10) zwischen seinem bedienteilfernen Endbereich (19) und seinem bedienteilnahen Endbereich (20) ausgebildet. Der Höhenunterschied zwischen den Endbereichen (17, 18) und den Endbereichen (19, 20) beträgt beispielsweise etwa 1 mm.

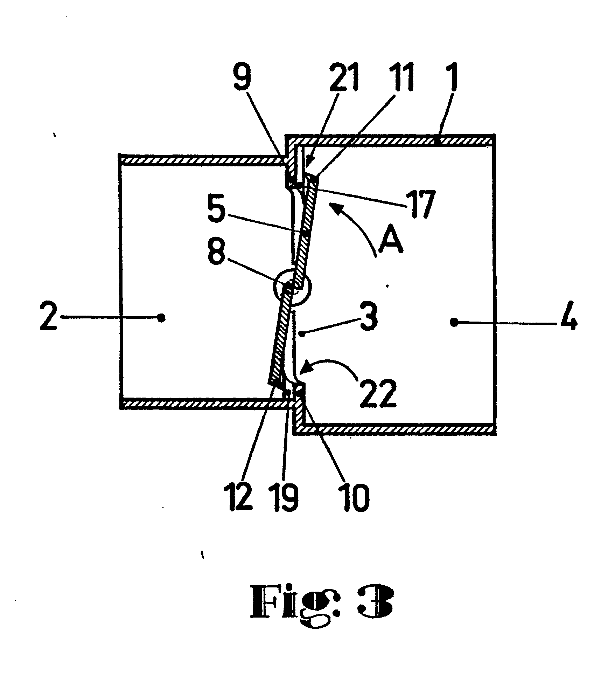

Wird die Verschlußklappe (5) aus ihrer Öffnungsstellung (vgl. Figur 1) in ihre Schließstellung verschwenkt, dann stellen sich zu Beginn der Schließstellung (vgl. Figur 2 und 3) etwa folgende Verhältnisse ein:

Der Dichtrand (11) berührt den oberen Anschlagrand (9) nur im bedienteilfernen Endbereich (17). Zwischen dem bedienteilnahen Endbereich (18) und dem Dichtrand (11) besteht ein Abstand, der dem Höhenunterschied des Anschlagrandes (9) entspricht. Es besteht also zwischen dem Dichtrand (11) und dem Anschlagrand (9) ein Längsspalt (21), dessen Weite sich vom bedienteilnahen Endbereich (18) zum bedienteilfernen Endebereich (17) hin verengt. Entsprechend schlägt der Dichtrand (12) zunächst nur im bedienteilfernen Endbereich (19) des unteren Anschlagrandes (10) an. Zwischen dem bedienteilnahen Endbereich (20) und dem Dichtrand (12) besteht ein Abstand. Es besteht also auch zwischen dem Anschlagrand (10) und dem Dichtrand (12) ein Längsspalt (22), der sich vom bedienteilnahen Ende (20) zum bedienteilfernen Ende (19) hin verengt.

Wird nun das Bedienteil (16) so weiterbetätigt, daß über die Kniehebelverbindung (13, 14, 15) die Verschlußklappe (5) sich weiter in Richtung des Pfeiles (A) (vgl. Figur 3) verschwenkt, dann nimmt die Anlage der Dichtränder (11, 12) an den Anschlagrändern (9, 10) in Richtung des Pfeiles (B) (vgl. Figur 2) fortschreitend zu, bis die beiden Längsspalte (21, 22) vollständig geschlossen sind. Am Ende der Schließbewegung ist der Kniehebelantrieb (13, 14, 15) über seinen Totpunkt bewegt, so daß nun die Verschlußklappe (5) in ihrer Dichtstellung verrastet ist. Bei der Schließbewegung verwindet sich die Verschlußklappe (5).

In der in den Figuren 2 und 3 gezeigten Stellung, zu Beginn der schließbewegung, sind die Längsspalte (21, 22) so weit, daß die durchströmende Luft nicht zu Pfeifgeräuschen führt. Wird begonnen, die Verschlußklappe (5) zu öffnen, dann geht der Kniehebel (14) über seinen Totpunkt zurück. Aufgrund der Elastizität der Verschlußklappe (5) stellt sich diese dann in die in den Figuren 2 und 3 gezeigte Stellung auf. Es besteht also keine stabile Stellung, in der Pfeifgeräusche auftreten könnten.

Bezugszeichenliste:

1 Gehäusekörper
2 Lufteinströmschacht
3 Luftdurchtrittsöffnung
4 Luftaustrittsschacht
5 Verschlußklappe
6 Lagerstelle
7 Lagerstelle
8 Schwenkachse
9 Anschlagrand
10 Anschlagrand
11 Dichtrand
12 Dichtrand
13 Betätigungszapfen
14 Kniehebel
15 Zapfen
16 Bedienteil
17 Endbereich
18 Endbereich
19 Endbereich
20 Endbereich
21 Längsspalt
22 Längsspalt
A Schwenkrichtung der Verschlußklappe
B Anlagerichtung der Dichtränder
H Höhe

**Patentansprüche**

1. Luftausströmvorrichtung mit einem Gehäusekörper (1) und einer bei einer Luftdurchtrittsöffnung (3) um eine Schwenkachse (8) schwenkbar gelagerten, elastisch verwindbaren Verschlußklappe (5), an deren einem Endbereich ein Bedienteil (16) angreift, wobei die Schwenkachse (8) parallel zu und zwischen an der Verschlußklappe (5) ausgebildeten Dichträndern (11, 12) verläuft, deren jedem ein Anschlagrand (9, 10) der Luftdurchtrittsöffnung (3) zugeordnet ist, welcher in einer Klappenstellung nahe der Schließstellung mit dem ihm zugeordneten Dichtrand (11, 12) einen Längsspalt (21, 22) bildet, dadurch gekennzeichnet, daß der Längsspalt (21, 22) sich vor der Schließstellung von dem bedienteilnahen Ende (18, 20) zum bedienteilfernen Ende (17, 19) des Anschlagrandes (9, 10) verengt, so daß bei der Schließbewegung der Dichtrand (11, 12) zunächst im bedienteilferneren Bereich und dann im bedienteilnäheren Bereich an dem Anschlagrand (9, 10) zur Anlage kommt.

2. Luftausströmvorrichtung nach Anspruch 1, dadurch gekennzeichnet, daß der sich verengende Längsspalt (21, 22) dadurch gebildet ist, daß der Anschlagrand (9, 10) geneigt zur Schließebene ausgebildet ist.

3. Luftausströmvorrichtung nach Anspruch 1 oder 2, dadurch gekennzeichnet, daß der sich verengende Längsspalt (21, 22) dadurch gebildet ist, daß die Verschlußklappe (5) so vorgeformt ist, daß ihr Dichtrand (11, 12) geneigt zur Schließebene verläuft.

4. Luftausströmvorrichtung nach Anspruch 1 oder 2,

dadurch gekennzeichnet,
daß der sich verengende Längsspalt (21, 22) dadurch gebildet ist, daß die Verschlußklappe (5) eine elastische Dichtlippe trägt, deren Dichtrand (11, 12) geneigt zur Schließebene verläuft.

5. Luftausströmvorrichtung nach einem der vorhergehenden Ansprüche
dadurch gekennzeichnet,
daß die Verschlußklappe (5) in der Schließstellung verrastet ist.

6. Luftausströmvorrichtung nach Anspruch 5,
dadurch gekennzeichnet,
daß das Bedienteil (16) die Verschlußklappe (5) über einen Kniehebel (14) antreibt, der in Schließstellung über seinem Totpunkt steht.

**Claims**

1. Air out-flow device having a housing body (1) and a shutter (5) mounted so that it can rotate around an axis of rotation (8) when an air opening (3) is provided, and capable of being twisted in an elastic manner, on one end region of which shutter an operating part (16) engages, wherein the axis of rotation (8) extends parallel to and between sealing rims (11, 12) constructed on the shutter (5), with each of which there is associated a stop rim (9, 10) of the air opening (3) which, in a shutter position near the closing position, with the sealing rim (11, 12) associated with it forms a longitudinal aperture (21, 22), characterised in that the longitudinal aperture (21, 22) narrows in front of the closing position from the end (18, 20) of the stop rim (9, 10) near the operating part to the end (17, 19) remote from the operating part, with the result that with the closing movement the sealing rim (11, 12) comes to rest on the stop rim (9, 10) first of all in the region further from the operating part and then in the region nearer the operating part.

2. Air out-flow device according to claim 1, characterised in that the narrowing longitudinal aperture (21, 22) is formed by the stop rim (9, 10) being constructed inclined to the closing plane.

3. Air out-flow device according to claim 1 or 2, characterised in that the narrowing longitudinal aperture (21, 22) is formed by the shutter (5) being preformed in such a way that its sealing rim (11, 12) extends inclined to the closing plane.

4. Air out-flow device according to claim 1 or 2, characterised in that the narrowing longitudinal aperture (21, 22) is formed by the shutter (5) carrying an elastic sealing lip, the sealing rim (11, 12) of which extends inclined to the closing plane.

5. Air out-flow device according to one of the preceding claims, characterised in that the shutter (5) is latched in the closing position.

6. Air out-flow device according to claim 5, characterised in that the operating part (16) drives the shutter (5) by means of a toggle lever (14) which in the closed position is above its dead centre position.

**Revendications**

1. Buse d'aération comprenant un corps (1) et un volet d'obturation (5) d'une ouverture (3) de passage d'air, volet gauchissable élastiquement et monté pivotant autour d'un axe (8), dont une partie d'extrémité est en prise avec un élément (16) de man œuvre, tandis que l'axe (8) de pivotement s'étend parallèlement à des bords (11, 12) d'étanchéité constitués sur le volet d'obturation (5) et entre ceux-ci, à chacun desquels est associé un bord (9, 10) de butée de l'ouverture (3) de passage d'air qui constitue, dans une position du volet proche de la position de fermeture, une fente longitudinale (21, 22) avec le bord (11, 12) d'étanchéité qui lui est associé, buse caractérisée en ce que la fente longitudinale (21, 22) se rétrécit avant la position de fermeture depuis l'extrémité proche de l'élément (18, 20) de man œuvre jusqu'à l'extrémité (17, 19) éloignée de celui-ci, du bord de butée, de telle sorte que, lors du mouvement de fermeture le bord (11, 12) d'étanchéité s'appuie d'abord sur le bord (9, 10) de butée dans la région la plus éloignée de l'élément de man œuvre et, ensuite, dans la région la plus proche de celui-ci.

2. Buse d'aération selon la revendication 1, caractérisée en ce que la fente longitudinale (21, 22) qui se rétrécit est constituée de telle sorte que le bord (9, 10) de butée est constitué avec une inclinaison par rapport au plan de fermeture.

3. Buse d'aération selon la revendication 2 ou 3, caractérisée en ce que la fente longitudinale (21, 22) qui se rétrécit est constituée de telle sorte que le volet d'obturation (5) est préformé de manière telle que son bord (11, 12) d'étanchéité s'étend avec une inclinaison par rapport au plan de fermeture.

4. Buse d'aération selon la revendication 1 ou 2, caractérisée en ce que la fente longitudinale (21, 22) qui se rétrécit est réalisée de telle sorte que le volet d'obturation (5) porte une lèvre d'étanchéité élastique, dont le bord (11, 12) d'étanchéité s'étend avec une inclinaison par rapport au plan de fermeture.

5. Buse d'aération selon l'une des revendications qui précèdent, caractérisée en ce que le volet d'obturation (5) est bloqué par un cran en position de fermeture.

6. Buse d'aération selon la revendication 5, caractérisée en ce que l'élément (16) de man œuvre entraîne le volet d'obturation (5) au moyen d'un levier coudé (14), qui se trouve sur son point mort en position de fermeture.

**Fig. 1**

**Fig. 2**

Fig. 3